# FASCICULE DE BREVET EUROPEEN

(11) **EP 3 077 225 B1**
(45) Date de publication et mention de la délivrance du brevet: **03.01.2018**
(21) Numéro de dépôt: 14802460.7
(22) Date de dépôt: 25.11.2014
(51) Int. Cl.: B60C 23/04, B60W 30/00

(54) **SYSTEME ET PROCEDE DE DETECTION INDIRECTE DU SOUS-GONFLAGE D'UN PNEUMATIQUE**
REIFENDRUCKÜBERWACHUNGSSYSTEM UND DESSEN VERFAHREN OHNE DIREKTER DRUCKMESSWERTENERMITTLUNG
TIRE PRESSURE MONITORING SYSTEM AND METHOD BASED ON A NON DIRECT ESTIMATION

(30) Priorité: 05.12.2013 FR 1362165
(43) Date de publication de la demande: 12.10.2016
(73) Titulaire: Renault S.A.S., 92100 Boulogne-Billancourt (FR)
(72) Inventeur: PITA-GIL, Guillermo, F-75017 Paris (FR); PICIU, Marius, F-92120 Montrouge (FR); MONTI, Alessandro, F-92250 La Garenne Colombes (FR)
(86) Numéro de dépôt international: PCT/EP2014/075519
(87) Numéro de publication internationale: WO 2015/082256

(56) Documents cités:
- DE-A1- 10 225 447
- DE-A1- 10 243 913
- DE-A1- 10 250 942
- DE-A1- 19 959 554
- DE-A1-102004 037 326
- DE-A1-102006 060 844
- DE-A1-102007 014 765
- DE-A1-102011 084 088

## Description

L'invention concerne de manière générale la détection du sous-gonflage de pneumatiques d'un véhicule automobile et, plus particulièrement, la détection indirecte de l'état de gonflage des pneumatiques des roues directrices du véhicule.

Dans le cadre de la présente description, on entend par effort transversal l'effort nécessaire pour faire tourner les roues directrices autour d'un axe vertical. On entend par effort longitudinal un effort appliqué aux roues motrices ou directrices pour les faire tourner autour d'axes horizontaux. Il s'agit plus particulièrement des efforts de traction ou de propulsion exercés par le moteur et des efforts de freinage.

Un état de gonflage défaillant du pneumatique d'une roue d'un véhicule automobile, en particulier le sous-gonflage, peut représenter un danger. Par sous-gonflage, on entend une baisse de la pression du pneumatique par rapport à une pression normale préconisée.

Par exemple, le sous-gonflage d'un pneumatique peut entraîner l'éclatement de celui-ci, dans certaines conditions de conduite. Un tel éclatement met gravement en danger la sécurité des personnes embarquées dans le véhicule. Même en l'absence d'éclatement, le sous-gonflage représente l'inconvénient d'accroître la consommation de carburant et la rapidité d'usure du pneumatique et affecte la tenue de route et la distance de freinage.

Pour toutes ces raisons, on a proposé d'installer dans les véhicules automobiles des moyens de surveillance automatique de la pression régnant dans les pneumatiques équipant ces véhicules. Une première solution consiste à installer, sur chaque pneumatique, un capteur de pression.

Ces moyens de surveillance de la pression des pneumatiques n'ont pas connu le succès escompté du fait du coût de l'installation de capteurs et de la complexité des moyens de transmission des signaux captés, qui doivent supporter l'environnement difficile du véhicule automobile, affecté de vibrations, de parasitage, de variations de température, de projections d'eau, de boue, etc....

Pour pallier cet inconvénient, on a alors proposé des méthodes dites indirectes, à partir de systèmes qui ne disposent pas de capteur de pression mais qui estiment les pertes de pression du pneumatique. Parmi ces méthodes indirectes, on peut trouver des méthodes basées sur l'analyse temporelle ou fréquentielle des signaux de vitesses des roues. Par exemple, on pourra se référer aux documents FR 2 927 018 et WO 2012127139, qui présentent des méthodes indirectes basées sur l'étude des écarts de vitesse entre chacune des roues du véhicule ou l'étude de la vitesse spectrale d'au moins l'une des roues du véhicule, en rapport avec l'état de gonflage de son pneumatique.

Toutefois, la pratique montre que les méthodes basées sur la vitesse des roues du véhicule ont des limites, et en particulier ne sont pas suffisamment fiables.

Le document DE19959554 décrit un système de surveillance de pressions de pneumatiques assisté par des mesures de variables dynamiques du véhicule, telles que le couple à la roue.

Au vu de ce qui précède, le but de l'invention est de proposer un système de détection du sous-gonflage du pneumatique d'une des roues du véhicule ne nécessitant pas de capteur de pression, et se basant sur d'autres informations que la vitesse de la roue.

L'invention a donc pour objet un système de détection de l'état de gonflage d'au moins l'un des pneumatiques des roues directrices d'un véhicule automobile, comprenant :
- des premiers moyens de mesure du couple transversal appliqué aux roues directrices,
- des seconds moyens de mesure de l'angle au volant,
- des troisièmes moyens de mesure de la vitesse du véhicule.

Selon une caractéristique générale de ce système, il comprend en outre des premiers moyens de calcul d'un couple transversal de référence en fonction de l'angle au volant et de la vitesse du véhicule mesurés, et des moyens de comparaison entre le couple transversal appliqué mesuré par les premiers moyens de mesure et le couple de référence calculé par les premiers moyens de calcul.

En effet, le couple transversal à appliquer aux roues directrices dépend généralement au premier ordre de trois paramètres, que sont l'état de gonflage des pneumatiques, la vitesse du véhicule et l'angle au volant. En connaissant deux des paramètres, en l'espèce la vitesse du véhicule et l'angle au volant, il est possible de détecter les défaillances de l'état de gonflage d'un des pneumatiques en surveillant la valeur du couple transversal appliqué.

Dans un mode de réalisation, le système de détection comprend en outre des moyens d'affichage d'une alerte de sous-gonflage du pneumatique d'une des roues directrices. On notera par ailleurs que le couple de référence, avant de pouvoir être calculé, doit avoir été appris par la cartographie.

On peut prévoir que les moyens de comparaison comprennent des deuxièmes moyens de calcul, aptes à déterminer l'écart absolu entre le couple transversal appliqué mesuré et le couple de référence calculé, et un comparateur apte à comparer ledit écart absolu à une valeur de seuil, les moyens d'affichage étant paramétrés pour indiquer une alerte de sous-gonflage du pneumatique d'une des roues si l'écart absolu dépasse la valeur de seuil.

Par exemple, les moyens de comparaison comprennent des moyens de mémorisation et de calcul d'une première moyenne de plusieurs couples transversaux appliqués mesurés à différents instants, et d'une seconde moyenne des couples transversaux de référence calculés en fonction des angles au volant et des vitesses à ces mêmes instant, les seconds moyens de calcul calculant l'écart absolu entre la première moyenne et la deuxième moyenne.

Dans un autre mode de réalisation, le véhicule automobile est équipé d'une direction assistée électrique, et un capteur de couple situé dans la colonne de direction, apte à mesurer le couple appliqué par le conducteur, les premiers moyens de mesure comprenant des troisièmes moyens de calcul pour calculer, à partir du couple demandé par le conducteur et du couple appliqué par la direction assistée électrique, le couple transversal appliqué aux roues directrices.

On notera que l'information de couple demandé par le conducteur est en réalité le couple qu'il a appliqué lui-même sur le volant. Cette consigne est interprétée par la direction assistée électrique, qui applique un couple de direction assistée, lequel va s'additionner au couple demandé pour être transmis aux roues du véhicule.

On peut également prévoir que les premiers moyens de calcul comprennent une cartographie dans laquelle sont stockées des valeurs de couple de référence en fonction de la vitesse du véhicule et de l'angle au volant, et un premier moyen d'émission d'un signal d'activation de l'apprentissage, la caractéristique mémorisée pouvant être modifiée lorsque le signal d'activation de l'apprentissage est émis.

Selon encore une autre caractéristique, les premiers moyens de calcul comprennent des seconds moyens d'émission d'un signal de réinitialisation et des quatrièmes moyens de calcul aptes à calculer la distance parcourue par le véhicule depuis la dernière émission du signal de réinitialisation, les premiers moyens d'émission étant paramétrés pour émettre le signal d'activation de l'apprentissage lorsque ladite distance parcourue est inférieure à 1 km.

On peut également prévoir que les seconds moyens d'émission comprennent un bouton de réinitialisation, ou un dispositif de détection du regonflage de l'un au moins des pneumatiques des roues du véhicule automobile.

Dans un autre mode de réalisation, les premiers moyens de calcul comprennent en outre un deuxième capteur apte à émettre un premier signal d'inhibition si le véhicule est situé sur une pente ou sur un dévers d'angle supérieur à une valeur d'angle prédéfinie, et/ou un troisième capteur apte à émettre un second signal d'inhibition si le couple longitudinal appliqué sur le véhicule est supérieur à une valeur de couple prédéfinie, et/ou un quatrième capteur apte à émettre un troisième signal d'inhibition si le véhicule ne se trouve ni à l'arrêt, ni en sortie de virage, et un troisième moyen d'émission apte à émettre, lorsqu'au moins l'un des trois signaux d'inhibition est émis, un signal d'arrêt, entrainant l'arrêt des moyens de comparaison et des premiers moyens d'émission, de sorte que le signal d'alerte de sous-gonflage d'un pneumatique ne peut plus être émis, et que la cartographie ne peut pas être modifiée lors de l'émission du signal d'arrêt.

Par exemple, le quatrième capteur comprend des cinquièmes moyens de calcul aptes à calculer la valeur absolue de l'angle au volant et la dérivée de l'angle au volant, un second comparateur pour comparer la valeur absolue de l'angle au volant calculée avec une valeur d'angle prédéfinie, le quatrième capteur signalant une sortie de virage lorsque la dérivée de l'angle au volant calculée et l'angle au volant sont de signes opposés et lorsque la valeur absolue d'angle au volant est supérieure à la valeur d'angle prédéfinie.

L'invention a également pour objet un procédé de détection de l'état de gonflage d'au moins l'un des pneumatiques des roues directrices d'un véhicule automobile, caractérisé en ce qu'il comprend une première phase d'apprentissage d'une cartographie dans laquelle sont stockées des valeurs de couple transversal de référence, en fonction de l'angle au volant et de la vitesse du véhicule, et une seconde étape de comparaison, pour un angle au volant et une vitesse du véhicule mesurés à un instant donné, du couple transversal appliqué à cet instant, avec le couple de référence calculé à partir de la caractéristique construite lors de la première phase.

D'autres buts, caractéristiques et avantages de l'invention apparaitront à la lecture de la description suivante, donnée uniquement à titre d'exemple non limitatif, et faite en référence aux dessins annexés sur lesquels :
- la figure 1 représente un schéma de fonctionnement d'un système de détection selon un mode de réalisation de l'invention,
- la figure 2 représente un schéma de fonctionnement détaillé des moyens de comparaison du système de détection de la figure 1,
- la figure 3 représente un schéma de fonctionnement détaillé des premiers moyens de calcul du système de détection de la figure 1,
- la figure 4 représente un schéma de fonctionnement détaillé du quatrième capteur des moyens de calcul de la figure 3,
- la figure 5 est un schéma explicatif accompagnant l'exposé des figures 3 et 4, et
- la figure 6 représente un procédé de détection du sous-gonflage d'un pneumatique selon un mode de réalisation de l'invention.

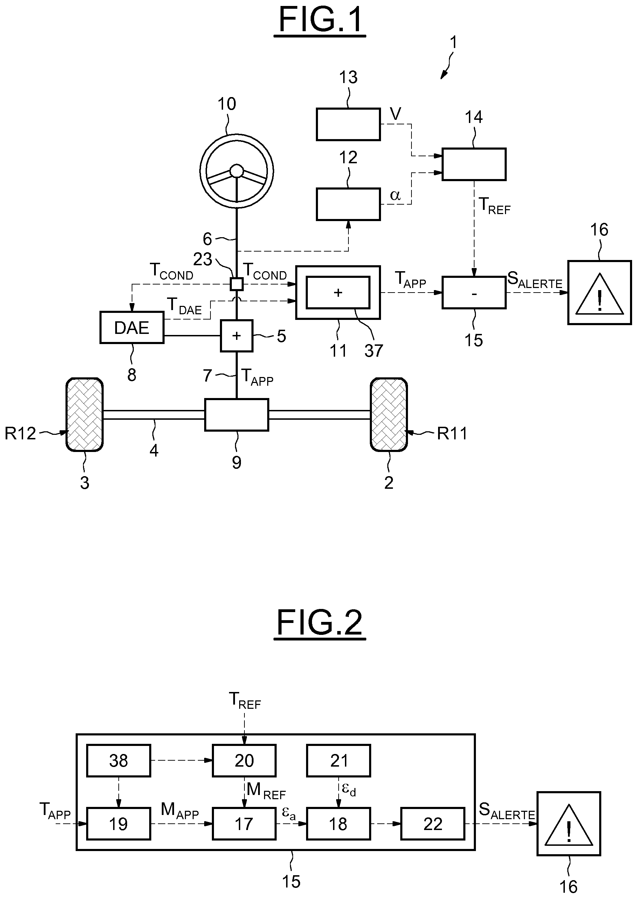

On se référera tout d'abord à la figure 1 qui représente un schéma de fonctionnement d'un système 1 de détection du sous-gonflage du pneumatique d'au moins l'une des roues d'un véhicule automobile.

La figure 1 concerne plus particulièrement un système de détection du sous-gonflage des pneumatiques 2 et 3 des roues directrices respectives R11 et R12 du véhicule automobile, liées à l'essieu 4. Le véhicule est doté d'une colonne de direction 5 comprenant une première extrémité 6 solidaire du volant 10 du véhicule, et une seconde extrémité 7. Un mécanisme 9 de transformation de mouvement transforme le couple transversal de la seconde extrémité 7 de la colonne de direction 9 en un effort longitudinal destiné à faire pivoter les roues R11 et R12 autour d'un axe vertical.

Le véhicule comprend dans cet exemple une direction assistée électrique DAE 8. Le fonctionnement d'une direction assistée électrique est le suivant. Dans un premier temps, un capteur de couple 23 situé sur la première extrémité 6 de la colonne de direction mesure le couple T_{cond} demandé par le conducteur. Cette information est transmise à un moyen de calcul compris dans la direction assistée électrique 8. Dans un second temps, le moyen de calcul calcule une consigne de couple à appliquer T_{DAE}, au moyen d'un moteur électrique. Cette valeur de couple est directement déduite du couple demandé par le conducteur et de la vitesse du véhicule. Un mécanisme compris dans la colonne de direction, par exemple un engrenage épicycloïdal, permet d'additionner ces deux couples T_{cond} et TDAE et crée le couple transversal appliqué aux roues du véhicule, T_{APP.} Dans un troisième temps, le couple appliqué T_{APP} aux roues est asservi par un système régulateur en boucle fermée.

De cette façon, il est aisé d'obtenir la valeur du couple transversal appliqué T_{APP} aux roues directrices. Pour ce faire, le système de détection 1 est muni de premiers moyens de mesure 11 du couple transversal T_{APP.} Les moyens 11 comprennent un module collectant le couple T_{cond} demandé par le conducteur, appliqué sur le volant et mesuré par le capteur de couple 23. Ils comprennent également un module collectant la consigne de couple T_{DAE} calculée par le moyen de calcul de la direction assistée 8. Ces premiers moyens de mesure comprennent en outre un opérateur 37 apte à additionner les deux signaux T_{cond} et T_{DAE} de sorte que le premier moyen de mesure 11 détecte le couple transversal appliqué T_{APP} aux roues directrices.

Le système de détection comprend également des deuxièmes moyens de mesure 12, comprenant un capteur apte à déterminer l'angle au volant α, et des troisièmes moyens de mesure 13, aptes à collecter le signal de vitesse du véhicule V par rapport au référentiel terrestre.

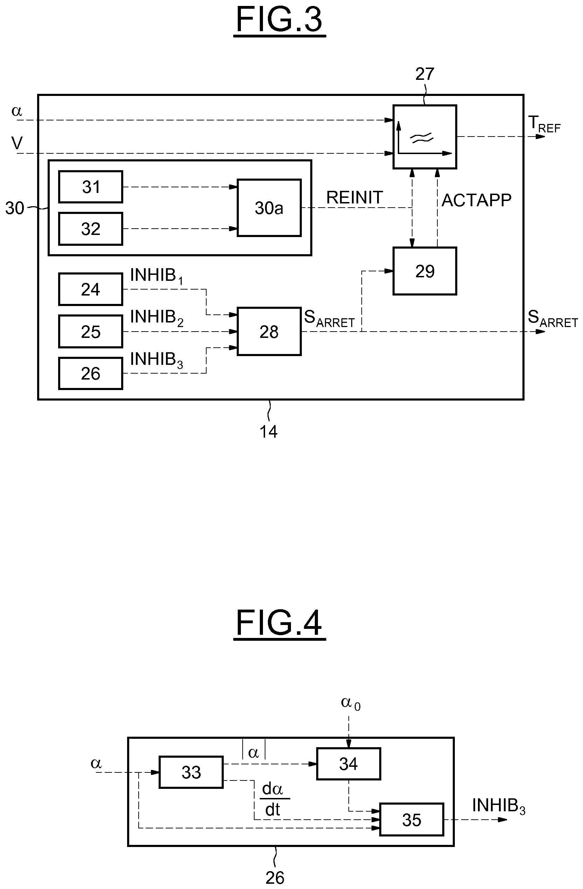

Le système comprend en outre des premiers moyens de calcul 14, comprenant une cartographie détaillée dans la figure 3. Les premiers moyens de calcul 14 délivrent une valeur d'un couple de référence T_{REF} en fonction de :
- l'angle au volant α délivré par les deuxièmes moyens de mesure 12, et
- la vitesse du véhicule V délivrée par les troisièmes moyens de mesure 13.

Le couple de référence T_{REF} ainsi calculé correspond au couple transversal appliqué aux roues directrices, pour un angle au volant α et une vitesse du véhicule V donnés, et pour un état de gonflage des pneumatiques des roues directrices optimal.

Le système comprend par ailleurs des moyens de comparaison 15, aptes à comparer le couple transversal appliqué T_{APP} et le couple de référence T_{REF}. Les moyens de comparaison 15, détaillés dans la figure 2, sont notamment aptes à détecter un écart absolu trop important entre les couples appliqué et de référence T_{APP} et T_{REF} et à émettre dans ce cas une alerte S_{ALERTE}. En effet, dans certaines conditions, le couple transversal appliqué T_{APP} aux roues directrices dépend au premier ordre des trois paramètres que sont la pression des pneumatiques des roues directrices, l'angle au volant α et la vitesse du véhicule V. En comparant deux valeurs de couple transversaux appliqué T_{APP} et de référence T_{REF}, pour un même angle au volant α et une même vitesse de véhicule V, on peut dans ces conditions obtenir l'information d'une défaillance de l'état de gonflage d'un au moins des pneumatiques. L'alerte S_{ALERTE} émise par les moyens de comparaison 15 signifie donc bien une défaillance de l'état de gonflage d'un au moins des pneumatiques des roues directrices du véhicule.

Le système comprend alors des moyens d'affichage 16 intégrés à l'écran de bord du véhicule de sorte que le conducteur est informé de l'émission d'une alerte de sous-gonflage émise par les moyens de comparaison 15.

On a représenté sur la figure 2 les différents éléments constituant les moyens de comparaison 15 du système de détection du sous-gonflage représenté en figure 1.

On rappelle que les éléments de comparaison 15 délivrent un signal d'alerte S_{ALERTE} en fonction des signaux de couple de référence T_{REF} calculé par les premiers moyens de calcul 14, et de couple transversal appliqué T_{APP} aux roues directrices. Dans cet exemple, les moyens de comparaison 15 comparent une moyenne de plusieurs valeurs du couple de référence T_{REF} calculées à différents instants avec une moyenne de plusieurs valeurs du couple transversal appliqué T_{APP} mesurées aux mêmes instants. Le signal d'alerte S_{ALERTE} est émis lorsque l'écart entre la moyenne des T_{REF} et la moyenne des T_{APP} est trop important par rapport à une valeur de seuil ε_{d}. Mesurer l'écart entre des moyennes de valeurs permet d'améliorer la fiabilité du système de détection.

Les éléments de comparaison 15 comprennent à cet égard un premier calculateur de moyenne 19 et un second calculateur de moyenne 20, tous deux liés à un dispositif d'horloge 38. Le dispositif 38 génère une liste d'instants (t₁, t₂,..., tₙ). Le premier calculateur de moyenne 19 comprend un module apte à collecter et mémoriser des valeurs de couples transversaux T_{APP} aux différents instants de la liste définie par le dispositif d'horloge 38. En parallèle, le second calculateur de moyenne 20 collecte et mémorise les valeurs de couples de référence T_{REF}, calculées par les premiers moyens de calcul 14 en fonction de l'angle au volant α et de la vitesse V du véhicule aux instants de la même liste. Le premier calculateur de moyenne 19 fait ensuite la moyenne des valeurs T_{APP} qu'il a en mémoire et émet un premier signal de moyenne M_{APP} des couples transversaux appliqués mémorisés. En parallèle, le second calculateur de moyenne 20 fait la moyenne des valeurs T_{REF} qu'il a en mémoire et émet un second signal de moyenne M_{REF} des couples de référence mémorisés.

Les moyens de comparaison 15 comprennent des seconds moyens de calcul 17, aptes à émettre un signal de sortie représentant l'écart absolu εₐ entre la première moyenne M_{APP} et la seconde moyenne M_{REF}. Par écart absolu, on entend la valeur absolue de la différence entre les deux signaux.

Les éléments de comparaison 15 comportent en outre des moyens de définition 21 d'un seuil de défaillance ε_{d}. Ce seuil de défaillance correspond à la valeur limite pour l'écart absolu εₐ à partir de laquelle on considère qu'il y a défaillance de l'état de gonflage de l'un au moins des pneumatiques des roues directrices du véhicule. Dans cet exemple, le seuil de défaillance ε_{d} est prédéfini, paramétré grâce aux moyens de définition 21 par le constructeur du véhicule automobile.

Les éléments de comparaison 15 sont donc munis d'un comparateur 18 disposé de manière à comparer l'écart absolu εₐ et le seuil de défaillance ε_{d}. Un générateur de signal d'alerte 22 reçoit directement le signal de sortie du comparateur 18 de manière à émettre le signal d'alerte S_{ALERTE} si et seulement si l'écart absolu εₐ est plus important que le seuil de défaillance ε_{d}.

De cette manière, les moyens de comparaison 15 sont aptes à émettre un signal d'alerte S_{ALERTE} de défaillance de l'état de gonflage de l'un au moins des pneumatiques des roues directrices du véhicule automobile en fonction du couple de référence T_{REF} calculé par les premiers moyens de calcul 14 et du couple transversal appliqué T_{APP} et déterminé par les premiers moyens de mesure 11.

Comme on le voit sur la figure 2, le signal d'alerte est envoyé vers les moyens d'affichage 16 pour en informer le conducteur du véhicule.

La figure 3 montre le détail des premiers moyens de calcul 14 du système de détection de la figure 1. Ces moyens de calculs émettent en sortie un signal T_{REF} de couple de référence, calculé en fonction de l'angle au volant α, déterminé par les deuxièmes moyens de mesure 12 et de la vitesse du véhicule V, déterminée par les troisièmes moyens de mesure 13. Les premiers moyens de calcul 14 sont également aptes à émettre un signal d'arrêt S_{ARRET} du système, en fonction des deux données d'entrée précitées.

En premier lieu, les premiers moyens de calcul 14 comprennent une cartographie 27 dans laquelle sont stockées des valeurs du couple de référence T_{REF} en fonction de l'angle au volant α et de la vitesse du véhicule V. Selon une de ses caractéristiques particulières, la cartographie 27 est modifiable. On entend par cela qu'elle peut fonctionner selon un premier mode de fonctionnement dans lequel elle fournit une valeur de couple de référence T_{REF} en fonction de l'angle au volant α et de la vitesse V, et selon un second mode de fonctionnement, au cours duquel elle collecte et mémorise les valeurs du couple transversal appliqué T_{APP} aux roues directrices en plus des valeurs d'angle au volant α et de vitesse V du véhicule. Ainsi, on distingue le premier mode de fonctionnement, correspondant à une exploitation des valeurs stockées dans la cartographie 27, et le second mode de fonctionnement, correspondant à l'apprentissage de la cartographie 27. La cartographie 27 peut enfin être commandée pour réinitialiser toutes ses valeurs.

Les premiers moyens de calcul 14 comprennent un premier moyen d'émission 29 apte à émettre un signal d'activation de l'apprentissage ACTAPP de la cartographie 27. La cartographie 27 est paramétrée de telle sorte qu'elle fonctionne selon son second mode de fonctionnement, dit d'apprentissage, si et seulement si le signal ACTAPP est émis par le premier moyen d'émission 29.

Les moyens de calcul 14 sont également munis de seconds moyens d'émission 30 d'un signal de réinitialisation REINIT des valeurs stockées dans la cartographie 27. Les seconds moyens d'émission 30 comprennent plus précisément un dispositif 32 de détection du regonflage des pneumatiques, un bouton de réinitialisation 31 et un moyen de calcul 30a, en l'espèce un opérateur logique OU. De cette façon, le signal de réinitialisation REINIT est envoyé après regonflage des pneumatiques ou après consigne particulière de l'utilisateur. La cartographie 27 est donc réinitialisée si et seulement si l'une au moins de ces deux conditions est réalisée. Le signal REINIT est également destiné aux moyens d'émission 29. En effet, les moyens d'émission 29 émettent le signal d'activation d'apprentissage ACTAPP immédiatement après réception du signal REINIT. En outre, les moyens d'émission 29 comprennent un module pour déterminer la distance parcourue par le véhicule depuis la dernière émission du signal REINIT. Dans cet exemple, ce module est un moyen de calcul apte à multiplier la vitesse du véhicule, collectée à partir des troisièmes moyens de mesure 13, par le temps écoulé depuis la dernière émission du signal REINIT. Les moyens d'émission 29 sont finalement paramétrés dans cet exemple pour émettre le signal ACTAPP entre l'émission du signal REINIT et l'instant au cours duquel le véhicule a ici parcouru 1 km depuis l'émission du dernier signal REINIT.

Les moyens de calcul 14 comportent en outre un capteur 24, apte à détecter si le véhicule automobile se trouve sur une pente d'angle supérieur à une valeur d'angle prédéfinie ou sur un dévers d'angle supérieur à une valeur d'angle prédéfinie. Si le capteur 24 détecte effectivement une de ces situations, il émet un signal INHIB₁. Les moyens de calcul 14 comportent également un capteur 25, apte à détecter si le véhicule est soumis à un couple longitudinal supérieur à une valeur de couple prédéfinie. Si un tel cas est détecté, un signal INHIB₂ est émis. Les moyens de calcul 14 comprennent enfin un capteur 26, apte à détecter si le véhicule se trouve en sortie de virage ou à l'arrêt. Le signal INHIB₃ est émis si et seulement si le véhicule n'est ni en sortie de virage, ni arrêté.

Les moyens de calcul 14 comprennent enfin des troisièmes moyens d'émission 28 d'un signal d'arrêt du système S_{ARRET}. Les moyens d'émission 28 comprennent en particulier un bloc opérateur logique OU de sorte que le signal d'arrêt S_{ARRET} est émis lorsque l'un des trois signaux d'inhibition est émis, c'est-à-dire lorsque les capteurs 24, 25 et 26 détectent l'une au moins des trois situations suivantes :
- une pente ou un dévers considéré(s) comme important(s),
- un couple longitudinal considéré comme important, et
- une situation dans laquelle le véhicule n'est ni en sortie de virage, ni à l'arrêt. Le signal d'arrêt du système S_{ARRET} est destiné d'une part à inhiber le fonctionnement des premiers moyens d'émission 29 du signal d'activation d'apprentissage ACTAPP et d'autre part à inhiber le fonctionnement des moyens de comparaison 15. De cette façon, lors de conditions particulières, il ne peut plus y avoir ni modification de la cartographie 27, ni émission d'un signal d'alerte S_{ALERTE} de sous-gonflage d'un des pneumatiques des roues du véhicule.

Comme visible sur la figure 4, qui détaille la constitution du capteur 26 de détection de sortie de virage compris dans les moyens de calcul 14 de la figure 3, un tel capteur 26 est réalisé à partir de moyens de calcul 33 collectant le signal d'angle au volant α. Les moyens de calcul 33 sont aptes à calculer la dérivée dα/dt de l'angle au volant par rapport au temps, et la valeur absolue |α|. Le capteur 26 collecte également un nouveau paramètre d'entrée α₀, correspondant à une valeur d'angle positive prédéfinie par le constructeur. Un comparateur 34 compare les signaux |α| et α₀. Le capteur 26 comprend des moyens de calcul 35 comprenant un module apte à comparer le signe de la dérivée de l'angle au volant dα/dt, et le signe de l'angle au volant α.

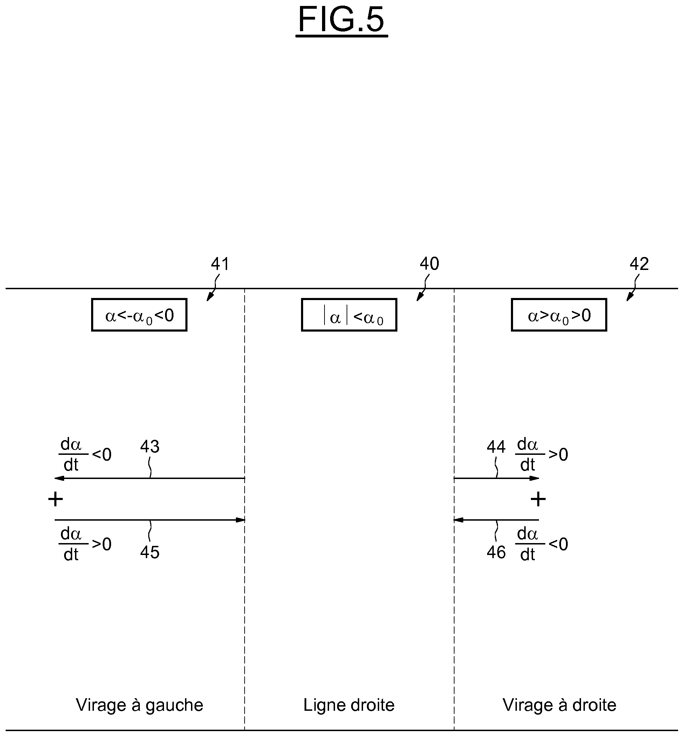

On a représenté sur la figure 5 les trois situations de direction dans lesquelles peut se trouver le véhicule. Un premier état 40 correspond à un état de ligne droite. Dans cet état, la valeur absolue |α| de l'angle au volant est inférieure à la valeur d'angle prédéfinie α₀. Un deuxième état 41 correspond à un état de virage à gauche. Dans cet état, l'angle au volant α est inférieur à l'opposé de la valeur d'angle positive α₀ définie par le constructeur. Un troisième et dernier état 42 correspond à un état de virage à droite. Dans cet état, l'angle au volant α est supérieur à la valeur d'angle positive α₀ définie par le constructeur. Quel que soit α, si on est dans un état de virage à droite, α est positif. Si on est dans un état de virage à gauche, α est négatif. Les transitions d'un état à un autre sont représentées par les quatre flèches 43 à 46 de la figure 5. La transition de l'état de ligne droite à l'état de virage est appelée inscription en virage, la transition inverse est appelée sortie de virage. La flèche 43 représente une inscription en virage à gauche. L'angle au volant α diminue, donc la dérivée d'angle de volant dα/dt est négative. La flèche 44 représente une inscription en virage à droite, avec une dérivée d'angle au volant positive. Les flèches 45 et 46 représentent respectivement une sortie de virage à gauche, avec une dérivée d'angle au volant positive, et une sortie de virage à droite, avec une dérivée d'angle au volant négative.

En définitive, on considère qu'on se trouve dans un état de sortie de virage si et seulement si les deux conditions suivantes sont réunies :
- la dérivée de l'angle au volant dα/dt par rapport au temps est de signe opposé par rapport à l'angle au volant α, et
- la valeur absolue |α| de l'angle au volant est supérieure à la valeur d'angle α₀ prédéfinie.

Les moyens de calcul 35 comprennent donc un opérateur logique OU et un opérateur logique NON, délivrant le signal de sortie INHIB₃ si et seulement si le véhicule n'est pas à l'arrêt et aucune des deux conditions évoquées dans le paragraphe précédent n'est réalisée.

Le signal INHIB₃ est particulièrement intéressant en ce qu'il permet d'empêcher la cartographie 27 de fonctionner selon le mode de fonctionnement en élaboration et d'empêcher les moyens de comparaison 15 de détecter une défaillance de l'état de gonflage. Le signal INHIB₃ est émis lorsque le véhicule n'est ni en sortie de virage, ni à l'arrêt.

En effet, il apparaît que le couple transversal appliqué T_{APP} aux roues directrices dépend de plusieurs paramètres qui sont différents selon les quatre situations du véhicule suivantes :
- quand le véhicule est à l'arrêt, le couple transversal appliqué T_{APP} dépend au premier ordre de l'angle au volant α et de la pression des pneumatiques,
- lorsque le véhicule avance à une vitesse V en ligne droite, c'est-à-dire lorsque la valeur absolue de l'angle au volant |α| est inférieure à la valeur α₀, le couple transversal appliqué T_{APP} ne dépend pas de la pression des pneumatiques,
- quand le véhicule avance à une vitesse V en inscription de virage, à gauche ou à droite, le couple transversal appliqué T_{APP} dépend, en plus de la vitesse V, de l'angle au volant α et de la pression des pneumatiques, d'autres facteurs difficiles à quantifier de sorte qu'il est extrêmement bruité, et
- quand le véhicule avance à une vitesse V en sortie de virage, à gauche ou à droite, le couple transversal appliqué T_{APP} dépend au premier ordre de la vitesse V, de l'angle au volant α et de la pression des pneumatiques.

En définitive, on voit que l'on ne peut obtenir une bonne corrélation entre le couple transversal appliqué T_{APP} et l'état de gonflage des pneumatiques que lorsque le véhicule est à l'arrêt, ou avançant à une vitesse V en sortie de virage. Le capteur 26 présente donc l'intérêt d'inhiber les moyens de comparaison 15 et le mécanisme d'apprentissage de la cartographie 27 lorsque les conditions ne sont pas appropriées.

On peut également considérer que lorsque le véhicule avance à une vitesse faible, par exemple inférieure à 9 km/h, la couple transversal appliqué T_{APP} dépend de l'angle au volant α et de la pression des pneumatiques de la même façon que lorsque le véhicule est à l'arrêt. Ainsi on peut, sans sortir du cadre de l'invention, envisager de modifier le capteur 26 pour qu'il n'envoie pas le signal d'inhibition INHIB₃ si le véhicule se déplace à faible vitesse.

On notera que l'invention peut être intégrée dans l'unité de commande électronique du véhicule, ou bien dans n'importe quel calculateur, équipé d'un processeur, embarqué dans le véhicule.

L'invention concerne, selon un autre aspect, un procédé de détection de l'état de gonflage d'un pneumatique des roues d'un véhicule automobile.

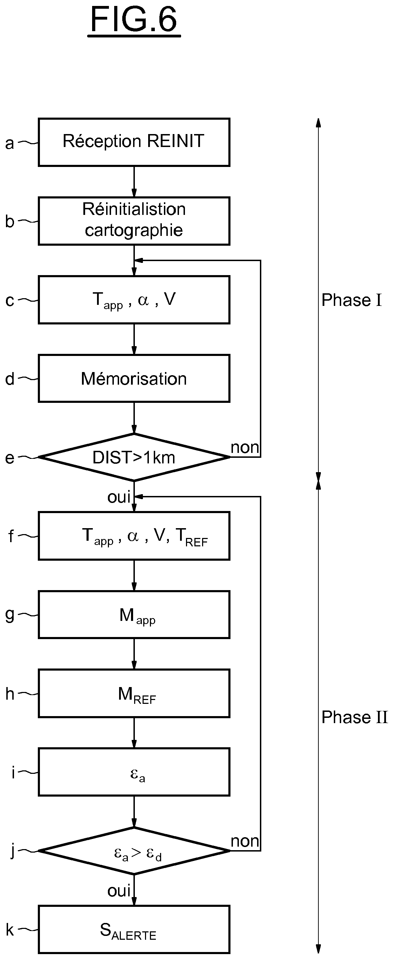

On a représenté sur la figure 6 un procédé selon un mode de mise en oeuvre de l'invention, au moyen du dispositif des figures 1 à 4. Le procédé débute lors de la détection du regonflage des pneumatiques par le dispositif de détection 32 ou lors d'une pression sur le bouton de réinitialisation 31.

Le procédé comporte une première phase I d'apprentissage de la cartographie 27, et une deuxième phase II de calcul et de comparaison.

On s'intéresse à la première phase I d'apprentissage de la cartographie.

Le procédé est lancé lors de l'étape a), à la réception du signal de réinitialisation REINIT. Ce signal est émis par les seconds moyens d'émission 30.

Cette étape est suivie de l'étape b) de remise à zéro des données, dans laquelle toutes les données mémorisées par la cartographie 27 sont effacées.

Dans l'étape c) suivante, les moyens de mesure 11, 12 et 13 sont mis en oeuvre et l'on mesure le couple transversal appliqué T_{APP}, l'angle au volant α et la vitesse du véhicule V.

On lance alors l'étape d), au cours de laquelle la cartographie 27 est forcée à fonctionner selon le deuxième mode de fonctionnement. En d'autres termes elle stocke des valeurs de couple transversal appliqué T_{APP} pour différentes valeurs d'angle au volant α et de vitesse V du véhicule, mesurées au cours de l'étape c). A l'issue de cette étape d), se trouve une étape de test e).

Au cours de l'étape de test e), on calcule la distance DIST parcourue par le véhicule depuis la fin de l'étape a). Si cette distance DIST est inférieure à une distance prédéfinie par le constructeur, en l'espèce 1km, on recommence l'étape c). Si elle est supérieure à 1 km, on clôt la phase I d'apprentissage de la cartographie 27 et on passe à l'étape f.

La phase II de comparaison commence donc par une étape f) de mesure et de mémorisation de valeurs du couple transversal appliqué T_{APP}, de l'angle au volant α et de la vitesse V du véhicule à différents instants. Cette étape commence par une première sous-étape de génération d'une séquence (t₁, t₂,..., tₙ) d'instants par une horloge 38. Chacun de ces instants constitueront une nouvelle sous-étape. Au cours de chacune de ces sous-étapes, on mesure le couple transversal appliqué T_{APP}, l'angle au volant α et la vitesse V du véhicule, et l'on mémorise ces valeurs en une première, une seconde et une troisième listes, toutes de n éléments, répertoriant respectivement les valeurs de T_{APP}, α, V. Dans une dernière sous-étape, on calcule une quatrième liste de valeurs de T_{REF} à partir des deuxième et troisième listes, grâce aux moyens de calcul 14. A l'issue de l'étape f), on dispose donc d'une liste L₁ de valeurs du couple transversal appliqué T_{APP}, mesuré à différents instants, et d'une liste L₂ de valeurs du couple de référence T_{REF} calculé à ces mêmes instants.

L'étape g) suivante consiste à calculer la moyenne M_{APP} des valeurs de la liste L₁ de couples transversaux appliqués. On utilise dans cet exemple le calculateur de moyenne 19.

L'étape h) consiste ensuite à calculer la moyenne M_{REF} des valeurs de la liste L₂ de couples de référence. Dans cet exemple, ce calcul est fait au moyen du calculateur de moyenne 20.

Le procédé comprend ensuite une étape i) qui consiste en un calcul de l'écart absolu εₐ entre les deux moyennes M_{APP} et M_{REF} calculées aux deux étapes g) et h). Plus précisément, l'écart absolu εₐ est la valeur absolue de la différence desdites moyennes. On réalise cette étape avec les moyens de comparaison 15.

A l'issue de cette étape i), on compare au cours d'une étape de test j) l'écart absolu εₐ à un seuil de défaillance ε_{d} prédéfini. Si l'écart εₐ est inférieur au seuil ε_{d}, on retourne à l'état initial de la phase II, c'est-à-dire qu'on répète les étapes du procédé à partir de l'étape f). Si l'écart εₐ dépasse le seuil ε_{d}, on passe à une étape k).

L'étape k) correspond à l'émission du signal d'alerte S_{ALERTE}. Le signal d'alerte est ici reçu par le moyen d'affichage 16 qui signale au conducteur une défaillance de l'état de gonflage de l'un au moins des pneumatiques du véhicule.

Ainsi, au moyen d'un dispositif ou d'un procédé de ce type, il est possible de détecter une défaillance de l'état de gonflage de l'un au moins des pneumatiques des roues d'un véhicule, et ce sans installer de capteur de pression dans les pneumatiques. En utilisant principalement des mesures du couple transversal appliqué T_{APP} aux roues directrices, de l'angle au volant α et de la vitesse V du véhicule, on peut également utiliser des capteurs qui sont déjà installés dans des véhicules conventionnels munis d'une direction assistée électrique. En calculant l'écart absolu entre la moyenne de plusieurs valeurs de couple transversal appliqué et la moyenne de plusieurs valeurs de couple de référence, on augmente la fiabilité du système et du procédé de détection. En utilisant des capteurs aptes à inhiber le système si le véhicule n'est ni à l'arrêt ni en sortie de virage, ou s'il est sur une pente ou un devers trop importants, ou s'il est soumis à un couple longitudinal trop important, on minimise le risque d'un dysfonctionnement de la cartographie 27 ou d'une fausse alerte.

## Revendications

1. Système (1) de détection de l'état de gonflage d'au moins l'un des pneumatiques (2, 3) des roues directrices (R11, R12) d'un véhicule automobile, comprenant :
- des premiers moyens de mesure (11) du couple transversal appliqué (T_{APP}) aux roues directrices,
- des seconds moyens de mesure (12) de l'angle au volant (α),
- des troisièmes moyens de mesure (13) de la vitesse (V) du véhicule,
**caractérisé en ce qu'**il comprend en outre des premiers moyens de calcul (14) d'un couple transversal de référence (T_{REF}) en fonction de l'angle au volant (α) et de la vitesse (V) du véhicule mesurés, et des moyens de comparaison (15) entre le couple transversal appliqué (T_{APP)} mesuré par les premiers moyens de mesure (11) et le couple de référence (T_{REF}) calculé par les premiers moyens de calcul (14).

2. Système de détection selon la revendication 1, **caractérisé en ce qu'**il comprend en outre des moyens d'affichage (16) d'une alerte de sous-gonflage du pneumatique d'une des roues directrices.

3. Système de détection selon l'une des revendications 1 et 2, **caractérisé en ce que** les moyens de comparaison (15) comprennent des deuxièmes moyens de calcul (17), aptes à déterminer l'écart absolu (εₐ) entre le couple transversal appliqué (T_{APP)} mesuré et le couple de référence (T_{REF}) calculé, et un comparateur (18) apte à comparer ledit écart absolu (εₐ) à une valeur de seuil (ε_{d}), les moyens d'affichage (16) étant paramétrés pour indiquer une alerte de sous-gonflage du pneumatique d'une des roues si l'écart absolu (εₐ) dépasse la valeur de seuil (ε_{d}).

4. Système de détection selon la revendication 3, **caractérisé en ce que** les moyens de comparaison (15) comprennent des moyens de mémorisation et de calcul (19, 20) d'une première moyenne (M_{APP}) de plusieurs couples transversaux appliqués (T_{APP}) mesurés à différents instants, et d'une seconde moyenne (M_{REF}) des couples transversaux de référence (T_{REF}) calculés en fonction des angles au volant (α) et des vitesses (V) à ces mêmes instant, les seconds moyens de calcul (17) calculant l'écart absolu (εₐ) entre la première moyenne (M_{APP}) et la deuxième moyenne (M_{REF}).

5. Système de détection selon l'une quelconque des revendications 1 à 4, **caractérisé en ce que** le véhicule automobile est équipé d'une direction assistée électrique (8), et un capteur de couple (23) situé dans la colonne de direction (5), apte à mesurer le couple demandé (T_{cond}) par le conducteur, les premiers moyens de mesure (11) comprenant des troisièmes moyens de calcul (37) pour calculer, à partir du couple demandé (T_{cond}) par le conducteur et du couple appliqué (T_{DAE}) par la direction assistée électrique, le couple transversal appliqué (T_{APP}) aux roues directrices.

6. Système de détection selon l'une quelconque des revendications 1 à 5, **caractérisé en ce que** les premiers moyens de calcul (14) comprennent une cartographie (27) dans laquelle sont stockées des valeurs de couple de référence (T_{REF}) en fonction de la vitesse du véhicule (V) et de l'angle au volant (α), et un premier moyen d'émission (29) d'un signal d'activation (ACTAPP) de l'apprentissage de la cartographie (27), la cartographie (27) étant modifiable lorsque le signal d'activation de l'apprentissage (ACTAPP) est émis.

7. Système de détection selon la revendication 6, **caractérisé en ce que** les premiers moyens de calcul (14) comprennent des seconds moyens d'émission (30) d'un signal de réinitialisation (REINIT) et des quatrièmes moyens de calcul aptes à calculer la distance (DIST) parcourue par le véhicule depuis la dernière émission du signal de réinitialisation (REINIT), les premiers moyens d'émission (29) étant paramétrés pour émettre le signal d'activation de l'apprentissage (ACTAPP) lorsque ladite distance (DIST) parcourue est inférieure à 1 km.

8. Système de détection selon la revendication 7, **caractérisé en ce que** les seconds moyens d'émission (30) comprennent un bouton de réinitialisation (31) ou un dispositif de détection (32) du regonflage de l'un au moins des pneumatiques des roues du véhicule automobile.

9. Système de détection selon l'une quelconque des revendications 6 à 8, **caractérisé en ce que** les premiers moyens de calcul (14) comprennent en outre un deuxième capteur (24) apte à émettre un premier signal d'inhibition (INHIB₁) si le véhicule est situé sur une pente ou sur un dévers d'angle supérieur à une valeur d'angle prédéfinie, et/ou un troisième capteur (25) apte à émettre un second signal d'inhibition (INHIB₂) si le couple longitudinal appliqué sur le véhicule est supérieur à une valeur de couple prédéfinie, et/ou un quatrième capteur (26) apte à émettre un troisième signal d'inhibition (INHIB₃) si le véhicule ne se trouve ni à l'arrêt, ni en sortie de virage, et un troisième moyen d'émission (28) apte à émettre, lorsqu'au moins l'un des trois signaux d'inhibition (INHIB₁, INHIB₂, INHIB₁) est émis, un signal d'arrêt (ARRSYS), entrainant l'arrêt des moyens de comparaison (15) et des premiers moyens d'émission (29), de sorte que le signal d'alerte (S_{ALERTE}) de sous-gonflage d'un pneumatique ne peut plus être émis, et que la cartographie (27) ne peut pas être modifiée lors de l'émission du signal d'arrêt (ARRSYS).

10. Système de détection selon la revendication 9, **caractérisé en ce que** le quatrième capteur (26) comprend des cinquièmes moyens de calcul (33) aptes à calculer la valeur absolue (|α|) de l'angle au volant et la dérivée (dα/dt) de l'angle au volant, un second comparateur (34) pour comparer la valeur absolue (|α|) de l'angle au volant calculée avec une valeur d'angle (α₀) prédéfinie, le quatrième capteur (26) signalant une sortie de virage lorsque la dérivée (dα/dt) de l'angle au volant calculée et l'angle au volant (α) sont de signes opposés et lorsque la valeur absolue (|α|) d'angle au volant est supérieure à la valeur d'angle (α₀) prédéfinie.

11. Procédé de détection de l'état de gonflage d'au moins l'un des pneumatiques des roues directrices d'un véhicule automobile, **caractérisé en ce qu'**il comprend une première phase (I) d'apprentissage d'une cartographie dans laquelle sont stockées des valeurs de couple transversal de référence (T_{REF}), en fonction de l'angle au volant (α) et de la vitesse du véhicule (V), et une seconde étape de comparaison (II), pour un angle au volant (α) et une vitesse du véhicule (V) mesurés à un instant donné, du couple transversal appliqué (T_{APP}) à cet instant, avec le couple de référence (T_{REF}) calculé à partir de la cartographie construite lors de la première phase (I).

## Patentansprüche

1. System (1) zur Erfassung des Druckzustands mindestens eines der Luftreifen (2, 3) der gelenkten Räder (R11, R12) eines Kraftfahrzeugs, das enthält:
- erste Messeinrichtungen (11) des an die gelenkten Räder angewendeten Quermoments (T_{APP}),
- zweite Messeinrichtungen (12) des Lenkradwinkels (α),
- dritte Messeinrichtungen (13) der Geschwindigkeit (V) des Fahrzeugs,
**dadurch gekennzeichnet, dass** es außerdem erste Recheneinrichtungen (14) eines Bezugs-Quermoments (T_{REF}) abhängig vom gemessenen Lenkradwinkel (α) und von der gemessenen Geschwindigkeit (V) des Fahrzeugs und Vergleichseinrichtungen (15) zwischen dem von den ersten Messeinrichtungen (11) gemessenen angewendeten Quermoment (T_{APP}) und dem von den ersten Recheneinrichtungen (14) berechneten Bezugsmoment (T_{REF}) enthält.

2. Erfassungssystem nach Anspruch 1, **dadurch gekennzeichnet, dass** es außerdem Anzeigeeinrichtungen (16) einer Unterdruckwarnung des Luftreifens eines der gelenkten Räder enthält.

3. Erfassungssystem nach einem der Ansprüche 1 und 2, **dadurch gekennzeichnet, dass** die Vergleichseinrichtungen (15) zweite Recheneinrichtungen (17), die fähig sind, die absolute Abweichung (εₐ) zwischen dem gemessenen angewendeten Quermoment (T_{APP}) und dem berechneten Bezugsmoment (T_{REF}) zu bestimmen, und einen Komparator (18) enthalten, der fähig ist, die absolute Abweichung (εₐ) mit einem Schwellwert (ε_{d}) zu vergleichen, wobei die Anzeigeeinrichtungen (16) parametriert sind, um eine Unterdruckwarnung des Luftreifens eines der Räder anzuzeigen, wenn die absolute Abweichung (εₐ) den Schwellwert (ε_{d}) überschreitet.

4. Erfassungssystem nach Anspruch 3, **dadurch gekennzeichnet, dass** die Vergleichseinrichtungen (15) Speicher- und Recheneinrichtungen (19, 20) eines ersten Mittelwerts (M_{APP}) mehrerer angewendeter Quermomente (T_{APP}), gemessen zu unterschiedlichen Zeitpunkten, und eines zweiten Mittelwerts (M_{REF}) der Bezugs-Quermomente (T_{REF}) enthalten, die abhängig von den Lenkradwinkeln (α) und den Geschwindigkeiten (V) zu diesem gleichen Zeitpunkt berechnet werden, wobei die zweiten Recheneinrichtungen (17) die absolute Abweichung (εₐ) zwischen dem ersten Mittelwert (M_{APP}) und dem zweiten Mittelwert (M_{REF}) berechnen.

5. Erfassungssystem nach einem der Ansprüche 1 bis 4, **dadurch gekennzeichnet, dass** das Kraftfahrzeug mit einer elektrischen Servolenkung (8) und einem in der Lenksäule (5) befindlichen Drehmomentsensor (23) ausgestattet ist, der fähig ist, das vom Fahrer geforderte Drehmoment (T_{cond}) zu messen, wobei die ersten Messeinrichtungen (11) dritte Recheneinrichtungen (37) enthalten, um ausgehend von dem vom Fahrer geforderten Drehmoment (T_{cond}) und von dem von der elektrischen Servolenkung angewendeten Drehmoment (T_{DAE}) das an die gelenkten Räder angewendete Quermoment (T_{APP}) zu berechnen.

6. Erfassungssystem nach einem der Ansprüche 1 bis 5, **dadurch gekennzeichnet, dass** die ersten Recheneinrichtungen (14) ein Kennfeld (27), in dem Bezugsmomentwerte (T_{REF}) abhängig von der Geschwindigkeit des Fahrzeugs (V) und vom Lenkradwinkel (α) gespeichert sind, und eine erste Sendeeinrichtung (29) eines Aktivierungssignals (ACTAPP) des Lernvorgangs des Kennfelds (27) enthalten, wobei das Kennfeld (27) verändert werden kann, wenn das Aktivierungssignal des Lernvorgangs (ACTAPP) gesendet wird.

7. Erfassungssystem nach Anspruch 6, **dadurch gekennzeichnet, dass** die ersten Recheneinrichtungen (14) zweite Sendeeinrichtungen (30) eines Rücksetzsignals (REINIT) und vierte Recheneinrichtungen enthalten, die fähig sind, die vom Fahrzeug seit dem letzten Senden des Rücksetzsignals (REINIT) zurückgelegte Strecke (DIST) zu berechnen, wobei die ersten Sendeeinrichtungen (29) parametriert sind, um das Aktivierungssignal des Lernvorgangs (ACTAPP) zu senden, wenn die zurückgelegte Strecke (DIST) kürzer als 1 km ist.

8. Erfassungssystem nach Anspruch 7, **dadurch gekennzeichnet, dass** die zweiten Sendeeinrichtungen (30) eine Rücksetztaste (31) oder eine Erfassungsvorrichtung (32) des Nachfüllens mindestens eines der Luftreifen der Räder des Kraftfahrzeugs enthalten.

9. Erfassungssystem nach einem der Ansprüche 6 bis 8, **dadurch gekennzeichnet, dass** die ersten Recheneinrichtungen (14) außerdem einen zweiten Sensor (24), der fähig ist, ein erstes Sperrsignal (INHIB₁) zu senden, wenn das Fahrzeug sich an einem Hang oder an einer Schräge mit einem Winkel größer als ein vordefinierter Winkelwert befindet, und/oder einen dritten Sensor (25), der fähig ist, ein zweites Sperrsignal (INHIB₂) zu senden, wenn das an das Fahrzeug angewendete Längsmoment größer ist als ein vordefinierter Drehmomentwert, und/oder einen vierten Sensor (26), der fähig ist, ein drittes Sperrsignal (INHIB₃) zu senden, wenn das Fahrzeug weder steht noch sich an einer Kurvenausfahrt befindet, und eine dritte Sendeeinrichtung (28) enthalten, die fähig ist, wenn mindestens eines der drei Sperrsignale (INHIB₁, INHIB₂, INHIB₁) gesendet wird, ein Haltsignal (ARRSYS) zu senden, was das Anhalten der Vergleichseinrichtungen (15) und der ersten Sendeeinrichtungen (29) nach sich zieht, so dass das Unterdruck-Warnsignal (S_{ALERTE}) eines Luftreifens nicht mehr gesendet werden kann, und dass das Kennfeld (27) beim Senden des Haltsignals (ARRSYS) nicht geändert werden kann.

10. Erfassungssystem nach Anspruch 9, **dadurch gekennzeichnet, dass** der vierte Sensor (26) fünfte Recheneinrichtungen (33), die fähig sind, den Absolutwert (|α|) des Lenkradwinkels und die Ableitung (dα/dt) des Lenkradwinkels zu berechnen, und einen zweiten Komparator (34) enthält, um den berechneten Absolutwert (|α|) des Lenkradwinkels mit einem vordefinierten Winkelwert (α₀) zu vergleichen, wobei der vierte Sensor (26) eine Kurvenausfahrt anzeigt, wenn die berechnete Ableitung (dα/dt) des Lenkradwinkels und der Lenkradwinkel (α) entgegengesetzte Vorzeichen haben und wenn der Absolutwert (|α|) des Lenkradwinkels höher als der vordefinierte Winkelwert (α₀) ist.

11. Verfahren zur Erfassung des Druckzustands mindestens eines der Luftreifen der gelenkten Räder eines Kraftfahrzeugs, **dadurch gekennzeichnet, dass** es eine erste Phase (I) eines Lernvorgangs eines Kennfelds, in dem Bezugs-Quermomentwerte (T_{REF}) gespeichert sind, abhängig vom Lenkradwinkel (α) und von der Geschwindigkeit des Fahrzeugs (V), und einen zweiten Schritt des Vergleichs (II), für einen Lenkradwinkel (α) und eine Geschwindigkeit des Fahrzeugs (V) gemessen zu einem gegebenen Zeitpunkt, des zu diesem Zeitpunkt angewendeten Quermoments (T_{APP}) mit dem Bezugsmoment (T_{REF}) enthält, das ausgehend vom in der ersten Phase (I) konstruierten Kennfeld berechnet wird.

## Claims

1. System (1) for detecting the state of inflation of at least one tire (2, 3) of the steered wheels (R11, R12) of a motor vehicle, including:
- first means (11) for measuring the transverse torque (T_{APP}) applied to the steered wheels,
- second means (12) for measuring the angle (α) at the steering wheel,
- third means (13) for measuring the speed (V) of the vehicle,
**characterized in that** it further includes first means (14) for computing a reference transverse torque (T_{REF}) as a function of the measured angle (α) at the steering wheel and the measured speed (V) of the vehicle and means (15) for comparing the applied transverse torque (T_{APP}) measured by the first measuring means (11) and the reference torque (T_{REF}) calculated by the first calculating means (14).

2. Detection system according to Claim 1, **characterized in that** it further includes means (16) for displaying an alarm in respect of underinflation of the tire of one of the steered wheels.

3. Detection system according to either one of Claims 1 and 2, **characterized in that** the comparison means (15) include second calculation means (17) adapted to determine the absolute difference (εₐ) between the measured applied transverse torque (T_{APP}) and the calculated reference torque (T_{REF}) and a comparator (18) adapted to compare said absolute difference (εₐ) to a threshold value (ε_{d}), the display means (16) having parameters set to indicate an alarm in respect of underinflation of the tire of one of the wheels if the absolute difference (εₐ) exceeds the threshold value (ε_{d}).

4. Detection system according to Claim 3, **characterized in that** the comparison means (15) include means (19, 20) for storing and calculating a first mean (M_{APP}) of a plurality of applied transverse torques (T_{APP}) measured at different times and a second mean (M_{REF}) of the reference transverse torques (T_{REF}) calculated as a function of the angles (α) at the steering wheel and the speeds (V) at those same times, the second calculation means (17) calculating the absolute difference (εₐ) between the first mean (M_{APP}) and the second mean (M_{REF}).

5. Detection system according to any one of Claims 1 to 4, **characterized in that** the motor vehicle is equipped with electrically assisted steering (8) and a torque sensor (23) situated in the steering column (5) adapted to measure the torque (T_{driv}) demanded by the driver, the first measuring means (11) including third calculation means (37) for calculating the transverse torque (T_{APP)} applied to the steered wheels from the torque (T_{driv}) demanded by the driver and the torque (T_{EAS}) applied by the electrically assisted steering.

6. Detection system according to any one of Claims 1 to 5, **characterized in that** the first calculation means (14) include a map (27) in which reference torque values (T_{REF}) are stored as a function of the speed (V) of the vehicle and values of the angle (α) at the steering wheel and first means (29) for emitting a signal (ACTAPP) for activating learning of the map (27), the map (27) being modifiable when the learning activation signal (ACTAPP) is emitted.

7. Detection system according to Claim 6, **characterized in that** the first calculation means (14) include second means (30) for emitting a reinitialization signal (REINIT) and fourth calculation means adapted to calculate the distance (DIST) travelled by the vehicle since the last emission of the reinitialization signal (REINIT), the first emission means (29) having parameters set to emit the learning activation signal (ACTAPP) if said distance (DIST) travelled is less than 1 km.

8. Detection system according to Claim 7, **characterized in that** the second emitting means (30) include a reinitialization button (31) or a device (32) for detecting reinflation of at least one tire of the wheels of the motor vehicle.

9. Detection system according to any one of Claims 6 to 8, **characterized in that** the first calculation means (14) further include a second sensor (24) adapted to emit a first inhibition signal (INHIB₁) if the vehicle is situated on a slope or on an camber at an angle greater than a predefined angle value and/or a third sensor (25) adapted to emit a second inhibition signal (INHIB₂) if the longitudinal torque applied to the vehicle is greater than a predefined torque value and/or a fourth sensor (26) adapted to emit a third inhibition signal (INHIB₃) if the vehicle is neither stationary nor leaving a turn and third emitting means (28) adapted to emit, when at least one of the three inhibition signals (INHIB₁, INHIB₂, INHIB₁) is emitted, a stop signal (ARRSYS) leading to stopping of the comparison means (15) and the first emitting means (29) so that the alarm signal (S_{ALARM}) in respect of underinflation of a tire can no longer be emitted and the map (27) cannot be modified at the time of the emission of the stop signal (ARRSYS).

10. Detection system according to Claim 9, **characterized in that** the fourth sensor (26) includes fifth calculation means (33) adapted to calculate the absolute value (|α|) of the angle at the steering wheel and the derivative (dα/dt) of the angle at the steering wheel, a second comparator (34) for comparing the calculated absolute value (|α|) of the angle at the steering wheel with a predefined angle value (α₀), the fourth sensor (26) signaling a turn exit if the calculated derivative (dα/dt) of the angle at the steering wheel and the angle (α) at the steering wheel are of opposite sign and if the absolute value (|α|) of angle at the steering wheel is greater than the predefined angle value (α₀).

11. Method of detecting the state of inflation of at least one tire of the steered wheels of a motor vehicle, **characterized in that** it includes a first phase (I) of learning a map in which reference transverse torque values (T_{REF}) are stored as a function of the angle (α) at the steering wheel and the speed (V) of the vehicle and a second step (II) of comparing, for an angle (α) at the steering wheel and a speed (V) of the vehicle, both measured at a given time, the transverse torque (T_{APP}) applied at that time with the reference torque (T_{REF}) calculated from the map constructed during the first phase (I).
